# EUROPEAN PATENT SPECIFICATION

(11) **EP 3 797 018 B1**
(45) Date of publication and mention of the grant of the patent: **16.02.2022**
(21) Application number: 19725066.5
(22) Date of filing: 13.05.2019
(51) Int. Cl.: B26B 21/40

(54) **SYSTEM AND METHOD FOR PROVIDING A VOICE-ACTIVATED ORDERING OF REPLACEMENT SHAVING CARTRIDGE**
SYSTEM UND VERFAHREN ZUR BEREITSTELLUNG EINER SPRACHAKTIVIERTEN BESTELLUNG EINES RASIERERKOPFS
SYSTÈME ET PROCÉDÉ POUR FOURNIR UNE COMMANDE ACTIVÉE PAR LA VOIX D'UNE CARTOUCHE DE RASAGE DE REMPLACEMENT

(30) Priority: 21.05.2018 US 201862674105 P
(43) Date of publication of application: 31.03.2021
(73) Proprietor: Bic Violex S.A., 14569 Greece (GR)
(72) Inventor: BRETTE, Thomas, 78100 Saint Germain en Laye (FR)
(74) Representative: Cabinet Beau de Loménie
(86) International application number: PCT/EP2019/062232
(87) International publication number: WO 2019/224039

(56) References cited:
- US-A1- 2015 019 342
- US-A1- 2016 167 241
- US-A1- 2017 232 624

## Description

### BACKGROUND OF THE DISCLOSURE

### 1. Field of the Disclosure

The present disclosure relates to a shaving razor having a replaceable cartridge with one or more blades. More particularly, the present disclosure relates to a system and method for providing a voice-activated ordering of replacement shaving cartridge(s) via the shaving razor.

### 2. Description of the Related Art

A user of a shaving razor is faced with the problem of replacing a shaving cartridge or a shaving razor blade once the blades of the cartridge have become dull. In order to replace the shaving cartridge, the user may, e.g., physically shop at a store, place a telephone call to a vendor, or place an online order for the replacement cartridges using a mobile device (e.g., a cell phone or a tablet) or a computer, all of which actions typically require the user to wait until the user has finished shaving and has left the bathroom, and subsequently remember to replace the shaving cartridge, as well as remember the information regarding the particular type of razor for the replacement order. In the cases of placing a telephone call or an online order, the user must also physically access a phone, a mobile device and/or a computer. Quite often, however, once the user has finished shaving, the user is prone to forget about the need to replace the shaving cartridge. Therefore, there is a need for a system and a method for placing an order for replacement cartridges (i) without the user having to leave the bathroom while shaving, and/or (ii) without the need to physically access an extra communication device, e.g., a phone, a mobile device and/or a computer. An example of prior art is given by the patent documentation US2016/167241.

### SUMMARY

The present disclosure provides a system and a method for providing a voice-activated ordering of replacement shaving cartridge(s) via the shaving razor.

The present disclosure also provides a system and a method for providing a voice-activated ordering of replacement shaving cartridge(s) via a microphone associated with the shaving razor.

The present disclosure further provides a system and method for implementing a voice-activated query regarding the particular type of shaving cartridge suitable for the particular user who desires ordering of replacement shaving cartridge(s), which voice-activated query is implemented via a microphone associated with the shaving razor.

The present disclosure further provides a system and method for implementing a "smart" razor with a microphone (and/or a speaker) and hardware/software capabilities to function as a stand-alone Internet-of-Things (IoT) device.

The present disclosure further provides such a system and a method in which the "smart" razor can implement a user's voice command to order replacement shaving cartridge(s), without the need to physically access and/or rely on external "smart" devices.

The present disclosure further provides such a system and a method in which the "smart" razor can provide, in response to a user's voice query/command, assistance regarding the type of shaving cartridge suited for the particular user's physical characteristics and shaving habits.

The present disclosure further provides such a system and a method in which the "smart" razor and/or linked devices can access and/or cumulatively collect, store, and/or analyze a particular user's physical characteristics (e.g., hair and skin characteristics), historical shaving cartridge information, and/or shaving habits to assist the particular user regarding the type of shaving cartridge suited for the particular user's physical characteristics, historical shaving cartridge information and shaving habits.

### BRIEF DESCRIPTION OF THE DRAWINGS

FIG. 1 is a perspective view of an example of a shaving cartridge.
FIG. 2 is a top view of the shaving cartridge.
FIG. 3 is a cross-sectional view of the shaving cartridge along the line A-A in FIG. 2.
FIG. 4 is a perspective view of a razor having a handle and a shaving cartridge.
FIG. 5 is another perspective view of a razor having a handle and a shaving cartridge.
FIG. 6a is a schematic showing various electric/electronic components of a razor and an external communication infrastructure, as well as communication paths between the razor and the external communication infrastructure, according to an embodiment of the present disclosure.
FIG. 6b is a schematic showing various electric/electronic components of a razor, as well as communication paths among the razor, external devices, and an external communication infrastructure, according to another embodiment of the present disclosure.
FIG. 7 is a logic flow chart of a method according to an example embodiment.
FIG. 8 is a logic flow chart of a method according to another exemplary embodiment.
FIG. 9 is a logic flow chart of a method according to yet another exemplary embodiment.
FIG. 10 is a computer-readable storage medium according to an embodiment herein.
FIG. 11 is an embodiment of a communication device for implementing one or more logic flows herein.
FIG. 12 is an embodiment of a system of the present disclosure.

A component or a feature that is common to more than one drawing is indicated with the same reference number in each of the drawings.

### DETAILED DESCRIPTION OF THE DISCLOSURE

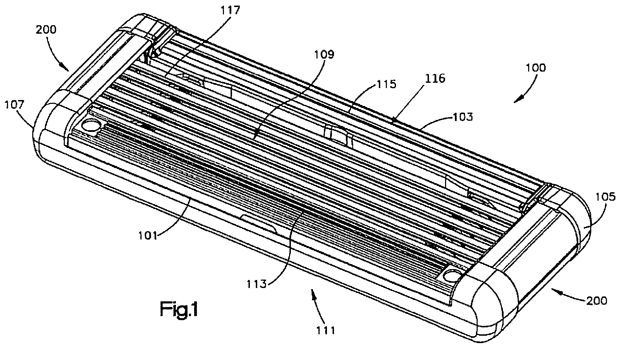

Referring to the drawings and, in particular to FIG. 1, a shaving cartridge is shown and generally represented by reference numeral 100. Shaving cartridge 100 includes retainers 200 for securing blades 117 to shaving cartridge 100. Shaving cartridge 100 also has a housing having a front edge 101, a rear edge 103, a pair of side edges 105, 107, a top surface 109, and a bottom surface 111. The pair of side edges 105, 107 extend between front edge 101 of the housing and rear edge 103 of the housing. Shaving cartridge 100 includes a guard bar 113 adjacent to front edge 101 of the housing and a cap 115 adjacent to rear edge 103 of the housing. A lubricating strip 116 can be provided on the surface of the cap 115. One or more blades 117 are positioned between the guard bar 113 and cap 115, and retained in position in the housing using one or more retaining element(s), e.g., a pair of retainers 200 positioned in the housing. Although shaving cartridge 100 shown in FIG. 1 includes five blades 117 retained in position in the housing using a pair of retainers 200, any number of blades can be used and any number and/or type of retaining element(s), e.g., one or more retaining clips, can be provided at suitable location(s) to retain the blade(s) in position. In addition, although the lubricating strip 116 is shown in the example as being provided on the cap 115, the lubricating strip can be provided on any other area of the cartridge, e.g., on the guard bar 113 and/or on the retainer(s) 200.

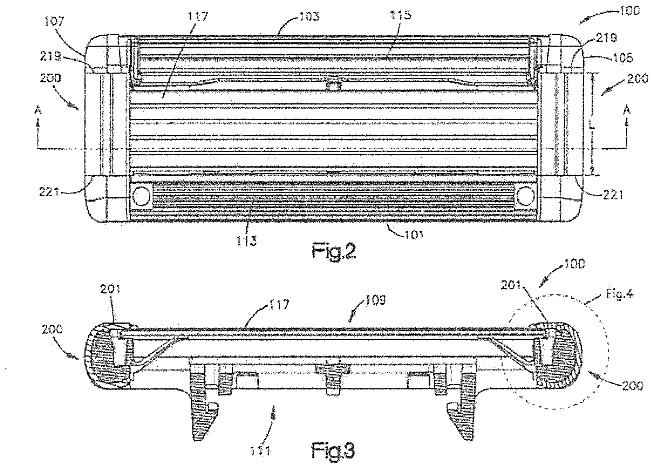

Referring to FIGS. 2-3, retainers 200 are spaced apart and positioned on opposite sides of the housing. Retainers 200 extend along side edges 105 and 107 of the housing and include a top portion 201 that extends above top surface 109 of the housing and above one or more blades 117 to retain the position of blades 117 in the housing. Retainers 200 can be made of any material that retains blades 117 in place and withstands shaving conditions, such as water and lather. Retainers 200 are preferably made of metal. Retainers 200 physically contact blades 117, so that retainers 200 and one or more of the blades can form an electrical path.

In this embodiment, retainers 200 extend along a length L on side edges 105 and 107 of about 8.5 mm, for example. However, it should be appreciated that retainers 200 can extend along a shorter or longer portion of side edges 105 and 107. For example, a pair of retainers 200 can each extend along the entire length, a shorter portion, or a longer portion of side edges 105 and 107. Such extensions can secure in place a guard bar, a cap element, or a trimmer assembly, for example. In addition, as noted above, any number of retainers 200 can be used with shaving cartridge 100. For example, a single retainer 200 or four retainers 200 can be used to retain the position of blades 117 in the housing.

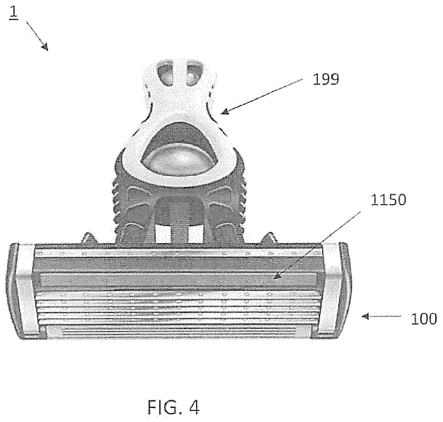

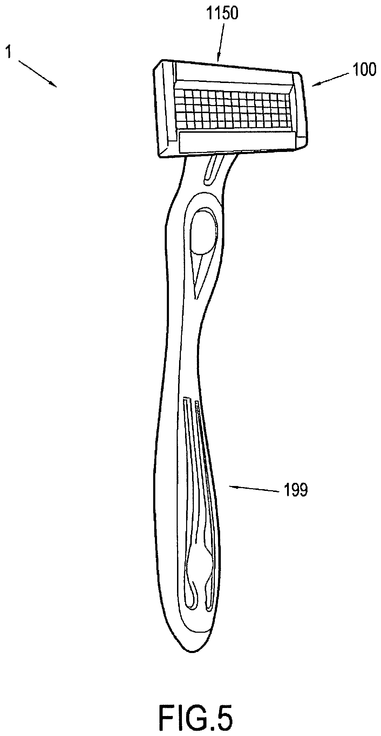

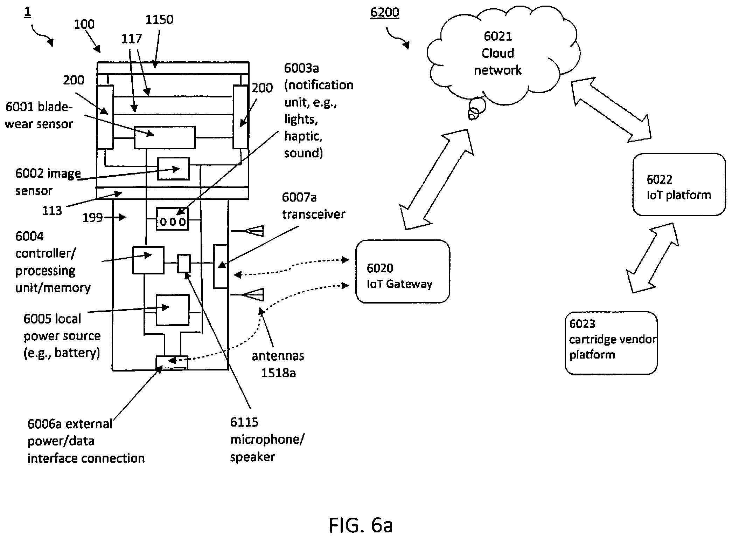

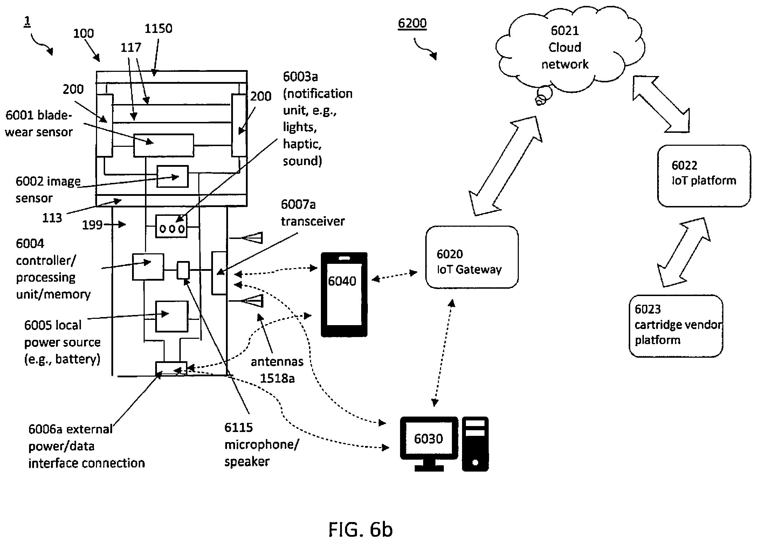

FIGS. 4-5 show an example razor 1 having a handle 199 and a cartridge 100. In this exemplary embodiment, a "smart" polymer 1150 designed to selectively generate lubricant, cosmetic and/or other materials can be provided on the cartridge. "Smart" polymers are artificial materials designed to respond in a particular manner when exposed to at least one environmental stimulus. The environmental stimulus can include temperature, pH, humidity/moisture, redox, weight, electrical stimulus, chemical stimulus, light (wavelength and/or intensity), electric/magnetic field, and/or electrochemical stimulus. The location of the smart polymer 1150 substantially corresponds to the surface of the cap 115 shown in FIGS. 1-2. In addition, various components (including electric and/or electronic components) and circuitry can be provided in or on the razor to implement various aspects of the present disclosure, as shown in FIGS. 6a and 6b.

FIG. 6a illustrates various examples of (i) electric and/or electronic components of a razor 1 (shown on the left side of FIG. 6a) having a cartridge 100, a handle 199 and a smart polymer strip 1150, (ii) electronic components of an external communication infrastructure 6200 (shown on the right side of FIG. 6a), and (iii) various connection and communication paths between the razor 1 and the external communication infrastructure 6200, according to an embodiment of the present disclosure.

Razor 1, illustrated in FIG. 6a, includes the following exemplary components that are electrically and/or communicatively connected: a blade-wear sensor 6001; an image sensor 6002, which can be provided in addition to the blade-wear sensor 6001; a two-way microphone/speaker 6115; a notification unit 6003a, which can be configured to generate a visual (e.g., lights), haptic and/or sound notification; a control unit 6004, which can be configured to include a controller, a processing unit and/or a memory; a local power source 6005 (e.g., battery); an interface unit 6006a, which can be configured as an interface for external power connection and/or external data connection; a transceiver unit 6007a for wireless communication; and antennas 1518a. In an alternate embodiment, a microphone and a speaker can be provided separately. Some communication technologies that can be used in connection with units 6006a and 6007a include cellular, satellite, WiFi, Bluetooth, low-power wide-area networks (LPWAN), or connecting directly to the internet via ethernet. Some data transfer protocols that can be utilized include, e.g., hypertext transfer protocol (HTTP), message queuing telemetry transport (MQTT), and constrained application protocol (CoAP), which examples are not limiting.

The blade-wear sensor 6001 is configured to detect a measurement parameter relating to the level of blade wear of the blade(s) 117. The blade-wear sensor 6001 can use, e.g., one or more of an electrical sensing technique, an optical sensing technique, and/or an electrochemical sensing technique to detect a physical and/or an electrochemical property of the blade(s) 117 indicative of a level of blade wear. For example, the level of blade wear can be determined based on the level of depletion of a coating applied to one or more of the blades(s) 117, which level of depletion in turn affects the electrical property and/or the electrochemical property of the one or more blade(s) 117. This example should not be construed as limiting. In addition, or alternatively, measurement parameter output from the image sensor 6002 (e.g., an optical or visual parameter indicating blade wear) can be used to determine the level of blade wear of the blade(s) 117. The output information from the blade-wear sensor 6001 and/or the image sensor 6002 can be compared to a reference threshold parameter level to determine the level of blade wear.

In an example embodiment, the control unit 6004 receives and processes the information output from the blade-wear sensor 6001 and/or the image sensor 6002 to output an indication (e.g., via the notification unit 6003a) regarding the level of wear of the blades 117, e.g., that the blades 117 are sufficiently worn as to require a replacement of the cartridge 100. The notification unit 6003a can provide an indication of the level of wear of the blades 117 (including an indication to replace the cartridge containing the blades 117) by at least one of (i) a light indication (e.g., using different colored LED lights), (ii) an aural indication (e.g., using different sound levels and/or patterns), and/or (iii) a haptic indication (e.g., using different haptic intensity and/or patterns). Alternatively, a user can manually determine that the blades 117 are sufficiently worn as to require a replacement of the cartridge 100.

Control unit 6004 can also (i) receive and process the information output from the two-way microphone/speaker 6115, and (ii) control the two-way microphone/ speaker 6115 to output audio information. In this case, as shown in FIG. 6a, a user's natural-language voice input command via the microphone/speaker 6115 is processed by the control unit 6004, e.g., using natural language processing (NLP), and the requested task and/or command is determined and/or executed. As an alternative, the NLP may be performed by a processor located external to the razor, e.g., in the IoT cloud network and/or IoT platform discussed below. Examples of natural-language voice input commands include, e.g., order replacement cartridge(s), determine arrival date of replacement cartridge, determine price of replacement cartridge(s), and/or advise which cartridge is more suitable for this individual user. Depending on the level of specificity of the information contained in the input command, the control unit 6004 (either individually or in combination with the IoT cloud network and/or IoT platform) can provide audio queries to the user via the microphone/speaker 6115 to determine additional specific information (e.g., cartridge maker, model type, quantity, shipping address, coupon code, etc.) necessary to fulfill the requested task. If sufficient information has been provided, the requested task can be executed. The natural-language voice inputs and/or outputs can be multi-language inputs and/or outputs.

Control unit 6004 can cumulatively collect and/or store the information regarding the determined level of blade wear (or corresponding remaining amount/percentage) to analyze and/or determine the rate of blade wear. In addition, control unit 6004 can analyze the rate of blade wear in conjunction with data provided by a user or data from a database regarding particular skin characteristics and/or hair properties, thereby enabling customized analysis and data collection of an individual user's razor use. The user data can be stored (in part or in entirety) in the razor, in a cloud database, or in an external device (e.g., an IoT connected device).

The information output from the control unit 6004, blade-wear sensor 6001, image sensor 6002, microphone/speaker 6115, the information regarding the determined level of wear (or corresponding remaining blade use), and/or information corresponding to a user's natural-language voice input command via the microphone/speaker 6115 can be transmitted from the razor 1 (i) wirelessly via the transceiver 6007a or (ii) via a wired connection through interface unit 6006a for external power/data connection, to an IoT gateway 6020. In the example embodiment shown in FIG. 6a, the circuitry of the razor 1 can be configured as a unit that is Internet Protocol (IP) capable by itself, and the information flow from and to the razor 1 is routed through, e.g., a WiFi router serving as the IoT gateway 6020. Alternatively, the circuitry of the razor 1 can be configured as a unit that is not Internet Protocol (IP) capable by itself, in which case the IoT gateway performs functions involved in communicating via the Internet/cloud, e.g., translating protocols, encrypting, processing, managing data, and the like. Other communication technologies include cellular, satellite, Bluetooth, low-power wide-area networks (LPWAN), or connecting directly to the internet via ethernet, which examples are not limiting. The information can be routed from the IoT gateway 6020 to a cartridge vendor platform 6023 via a cloud network 6021 and an IoT platform 6022. Although the IoT platform 6022 is shown separately from the cloud network 6021 in FIG. 6a, the cloud network 6021 can encompass the IoT platform 6022. The natural-language processing can be performed at the control unit 6004, the cloud network 6021, the IoT platform 6022, and/or the cartridge vendor platform 6023. As used in this disclosure, the term "cloud network" encompasses the Internet and the associated connection infrastructure.

In an example embodiment, the user data can be stored (in part or in entirety) at the cartridge vendor platform 6023 and/or at the IoT platform 6022. Depending on the type of information transmitted from the razor 1, the cartridge vendor platform 6023 can (i) fulfill the requested task (e.g., fulfill the order for the requested replacement cartridge), and/or (ii) transmit to the razor 1 responsive information relevant to the information query (e.g., information regarding an individual user's razor use, skin characteristics, hair characteristics, historically preferred razor cartridge model and/or quantity package, and the like), which responsive information can be output as natural language voice output via the microphone/speaker 6115 to assist the user in confirming and/or selecting a replacement cartridge. For example, if a user's voice command is "order my usual cartridges", the user's historical order information can be retrieved and presented to the user, e.g., "you ordered ten cartridges of model A, would you like to repeat this order?", and the user can confirm the order or modify the order with different information. In another example, if a user's voice query is "what is the shaving cartridge best suited for my skin characteristics", the user's skin characteristics information and the suitability information regarding the available cartridges from the cartridge vendor platform (e.g., a server platform of a generic retail vendor or a specific cartridge maker) can be referenced to present the requested information to the user to assist the user in selecting a cartridge for ordering. In addition, a confirmation of receipt of order execution at the cartridge vendor platform 6023 can be presented as a natural-language voice output via the microphone/speaker 6115, e.g., "your order has been received at the vendor".

FIG. 6b illustrates various connection and communication paths between the razor 1 and the external communication infrastructure 6200, according to another embodiment of the present disclosure. As shown in FIG. 6b, the information flow from, and to, the razor 1 is routed through a secondary device that is Internet Protocol (IP) capable, e.g., a mobile device 6040 or a computer 6030. In the example embodiment shown in FIG. 6b, the circuitry of razor 1 need not be Internet Protocol (IP) capable by itself, although the example embodiment does not preclude the circuitry of razor 1 being IP-capable by itself. In an alternate embodiment, a microphone and a speaker can be provided separately.

In one communication path of the example embodiment illustrated in FIG. 6b, information output from the control unit 6004, blade-wear sensor 6001, image sensor 6002, microphone/speaker 6115, the information regarding the determined level of wear (or corresponding remaining blade use), and/or information corresponding to a user's natural-language voice input command via the microphone/speaker 6115 can be transmitted from the razor 1 (e.g., while the user is using the razor 1 in a bathroom) to a mobile device 6040, which mobile device can be provided with client(s) (e.g., one or more application software or "app") and perform some or all of the functionalities performed by the circuitry components of the razor 1 shown in FIG. 6a, e.g., ordering of replacement cartridges via the Internet, data analysis, and/or storage of acquired information. The information received by the mobile device 6040 can be routed to the loT gateway 6020, e.g., a WiFi router, and subsequently routed to a cartridge vendor platform 6023 via the cloud network 6021 and the IoT platform 6022. Although the IoT platform 6022 is shown separately from the cloud network 6021 in FIG. 6a, the cloud network 6021 can encompass the IoT platform 6022. Other communication technologies include cellular, satellite, Bluetooth, low-power wide-area networks (LPWAN), or connecting directly to the internet via ethernet, which examples are not limiting. Some data transfer protocols that can be utilized include, e.g., hypertext transfer protocol (HTTP), message queuing telemetry transport (MQTT), and constrained application protocol (CoAP), which examples are not limiting.

In another communication path of the example embodiment illustrated in FIG. 6b, information output from the control unit 6004, blade-wear sensor 6001, image sensor 6002, microphone/speaker 6115, the information regarding the determined level of wear (or corresponding remaining blade use), and/or information corresponding to a user's natural-language voice input command via the microphone/speaker 6115 can be transmitted from the razor 1 (e.g., while the user is using the razor 1 in a bathroom) to a computer 6030, which can be provided with client(s) (e.g., one or more application software) and perform some or all of the functionalities performed by the circuitry components of the razor 1 shown in FIG. 6a, e.g., ordering of replacement cartridges via the Internet, data analysis, and/or storage of acquired information. The information received by the computer 6030 can be routed to the IoT gateway 6020, e.g., a WiFi router, and subsequently routed to a cartridge vendor platform 6023 via the cloud network 6021 and the IoT platform 6022. Other communication technologies include cellular, satellite, Bluetooth, low-power wide-area networks (LPWAN), or connecting directly to the internet via ethernet, which examples are not limiting.

In the example system illustrated in FIG. 6b, information and/or processing of information can be shared among two or more of the razor 1, the computer 6030, the mobile device 6040, the IoT gateway 6020, the cloud network 6021, the IoT platform 6022 and/or the cartridge vendor platform 6023. For example, the natural-language processing can be performed at the control unit 6004, the computer 6030, the mobile device 6040, the cloud network 6021, the IoT platform 6022, and/or the cartridge vendor platform 6023. In addition, natural-language voice input (e.g., ordering of replacement cartridges) and/or natural-language voice output (e.g., a confirmation of receipt of order execution at the cartridge vendor platform 6023, e.g., "your order has been received at the vendor") can be implemented via the microphone/speaker 6115, the computer 6030, and/or the mobile device 6040. The natural-language voice inputs and/or outputs can be multi-language inputs and/or outputs.

As an example of distributed functionality in the example system illustrated in FIG. 6b, the sensor data from the blade-wear sensor 6001 can be transmitted to the computer 6030 or the mobile device 6040 (e.g., while the user is using the cartridge on which the blade-wear sensor 6001 is provided), and the user's voice command and/or query can be inputted via the microphone/speaker of the computer 6030 or the mobile device 6040. In addition, the response transmission from the vendor platform can be outputted via the microphone/speaker of the computer 6030 or the mobile device 6040. As another example of distributed functionality in the example system illustrated in FIG. 6b, the user's voice command and/or query can be inputted via the microphone/speaker 6115 (while the user is using the razor 1 on which the microphone/speaker 6115 is provided), and the response transmission from the vendor platform 6023 can be outputted via the computer 6030 or the mobile device 6040.

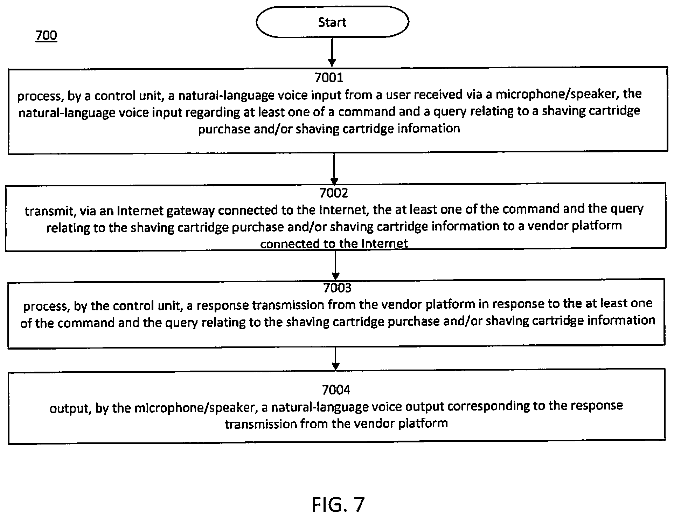

FIG. 7 is a logic flow 700 of an example method for processing at least one of a command and a query relating to a shaving cartridge purchase and/or shaving cartridge information according to an embodiment. At block 7001, a natural-language voice input from a user received via a microphone/speaker 6115 is processed by a control unit (e.g., control unit 6004 in razor 1), which natural-language voice input is regarding at least one of a command and a query relating to a shaving cartridge purchase and/or shaving cartridge information. At block 7002, the at least one of the command and the query relating to the shaving cartridge purchase and/or shaving cartridge information is transmitted, via an Internet gateway 6020 (e.g., WiFi router) connected to the Internet, to a vendor platform 6023 connected to the Internet. At block 7003, a response transmission from the vendor platform 6023 in response to the at least one of the command and the query relating to the shaving cartridge purchase and/or shaving cartridge information is processed by the control unit. At block 7004, the microphone/speaker 6115 outputs a natural-language voice output corresponding to the response transmission from the vendor platform 6023.

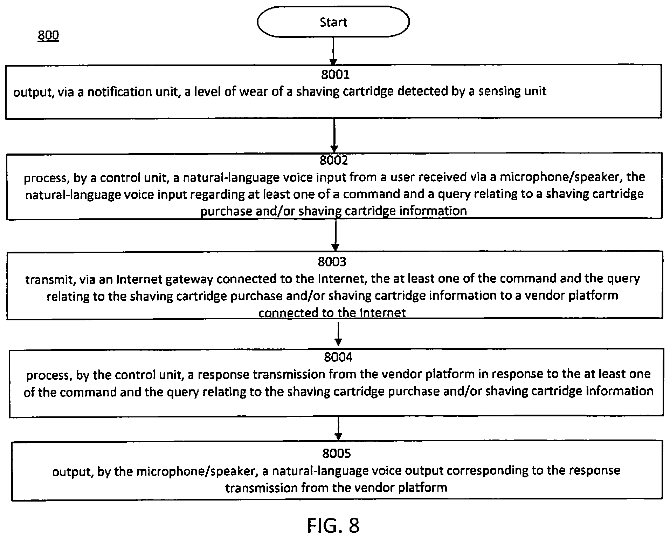

FIG. 8 is a logic flow 800 of another example method for processing at least one of a command and a query relating to a shaving cartridge purchase and/or shaving cartridge information according to an embodiment. At block 8001, a notification unit (e.g., unit 6003a of razor 1) outputs a level of wear of a shaving cartridge detected by a sensing unit (e.g., unit 6001 of razor 1). At block 8002, a natural-language voice input from a user received via a microphone/speaker 6115 is processed by a control unit (e.g., control unit 6004 in razor 1), which natural-language voice input is regarding at least one of a command and a query relating to a shaving cartridge purchase and/or shaving cartridge information. At block 8003, the at least one of the command and the query relating to the shaving cartridge purchase and/or shaving cartridge information is transmitted, via an Internet gateway 6020 (e.g., WiFi router) connected to the Internet, to a vendor platform 6023 connected to the Internet. At block 8004, a response transmission from the vendor platform 6023 in response to the at least one of the command and the query relating to the shaving cartridge purchase and/or shaving cartridge information is processed by the control unit. At block 8005, the microphone/speaker 6115 outputs a natural-language voice output corresponding to the response transmission from the vendor platform 6023.

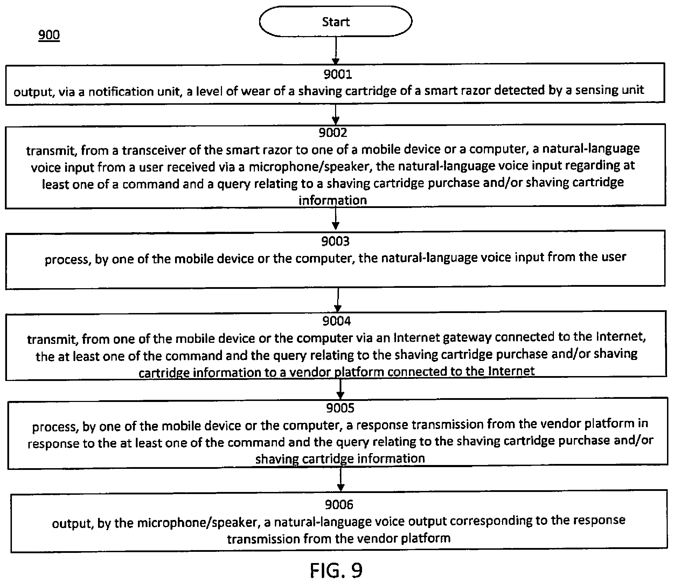

FIG. 9 is a logic flow 900 of yet another example method for processing at least one of a command and a query relating to a shaving cartridge purchase and/or shaving cartridge information according to an embodiment. At block 9001, a notification unit (e.g., unit 6003a of razor 1) outputs a level of wear of a shaving cartridge detected by a sensing unit (e.g., unit 6001 of razor 1). At block 9002, a natural-language voice input from a user received via a microphone/speaker is transmitted from a transceiver of a smart razor to one of a mobile device or a computer, which natural-language voice input is regarding at least one of a command and a query relating to a shaving cartridge purchase and/or shaving cartridge information. At block 9003, one of the mobile device or the computer processes the natural-language voice input from the user. At block 9004, one of the mobile device or the computer transmits, via an Internet gateway connected to the Internet, the at least one of the command and the query relating to the shaving cartridge purchase and/or shaving cartridge information to a vendor platform connected to the Internet. At block 9005, one of the mobile device or the computer processes a response transmission from the vendor platform 6023 in response to the at least one of the command and the query relating to the shaving cartridge purchase and/or shaving cartridge information. At block 9006, the microphone/speaker 6115 outputs a natural-language voice output corresponding to the response transmission from the vendor platform 6023.

It should be noted that parts of the example techniques 700, 800 and 900 illustrated in FIGS. 7-9 can be modified and/or combined in part and/or entirely.

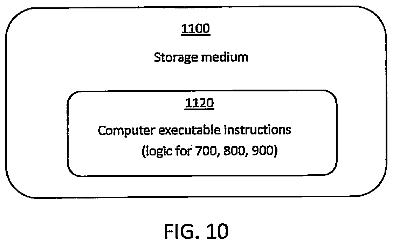

Fig. 10 illustrates an embodiment of a storage medium 1100, which can comprise an article of manufacture, e.g., storage medium 1100 can include any non-transitory computer readable medium or machine-readable medium, such as an optical, magnetic or semiconductor storage. Storage medium 1100 can store various types of computer executable instructions, e.g., 1120. For example, storage medium 2000 can store various types of computer executable instructions to implement techniques 700, 800, and 900. Further, such instructions can be executed by, e.g., control unit 6004, computer 6030 and/or mobile device 6040, to carry out the techniques described herein.

Some examples of a computer readable storage medium or machine-readable storage medium can include tangible media capable of storing electronic data, e.g., volatile memory or non-volatile memory, removable or non-removable memory, erasable or non-erasable memory, writeable or re-writeable memory, and the like. Some examples of computer-executable instructions can include suitable type of code, e.g., source code, compiled code, interpreted code, executable code, static code, dynamic code, object-oriented code, visual code, and the like. The examples are not limited in this context.

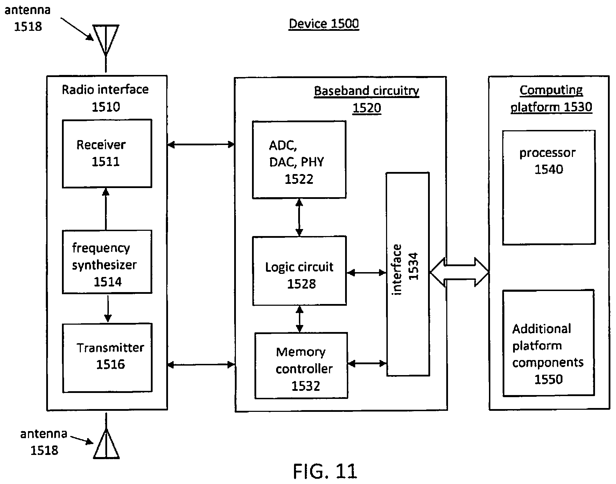

Fig. 11 illustrates an embodiment of a communications device 1500 which can implement one or more of logic flow 700, logic flow 800, and logic flow 900, storage medium 1100, the computer 6030, the mobile device 6040, and one or more functionalities of the circuitry of razor 1, according to one or more embodiments. In an example embodiment, communication device 1500 can comprise a logic circuit 1528 which can include physical circuits to perform operations described for one or more of logic flow 700, logic flow 800, and logic flow 900. In addition, communication device 1500 can include a radio interface 1510, baseband circuitry 1520, and computing platform 1530. However, the embodiments are not limited to this example configuration.

Communication device 1500 can implement some or all of the structure and/or operations for one or more of logic flow 700, logic flow 800, and logic flow 900, storage medium 1100, computer 6030, mobile device 6040, one or more functionalities of the circuitry of razor 1, and logic circuit 1528 in (i) a single computing entity, e.g., a single device, or (ii) in a distributed manner. In the latter case, communication device 1500 can distribute portions of the structure and/or operations for one or more of logic flow 700, logic flow 800, and logic flow 900, storage medium 1100, computer 6030, mobile device 6040, one or more functionalities of the circuitry of razor 1, and logic circuit 1528 across multiple computing platforms and/or entities using a distributed system architecture, e.g., a master-slave architecture, a client-server architecture, a peer-to-peer architecture, a shared database architecture, and the like. The embodiments are not limited in this context.

In an example embodiment, radio interface 1510 can include one or more component(s) adapted to transmit and/or receive single-carrier or multi-carrier modulated signals such as CCK (complementary code keying), OFDM (orthogonal frequency division multiplexing), and/or SC-FDMA (single-carrier frequency division multiple access) symbols. Radio interface 1510 can include, e.g., a receiver 1511, a frequency synthesizer 1514, a transmitter 1516, and one or more antennas 1518. However, the embodiments are not limited to these examples.

Baseband circuitry 1520, which communicates with radio interface 1510 to process receive signals and/or transmit signals, can include a unit 1522 comprising an analog-to-digital converter, a digital-to-analog converter, and a baseband or physical layer (PHY) processing circuit for physical link layer processing of receive/transmit signals. Baseband circuitry 1520 can also include, for example, a memory controller 1532 for communicating with a computing platform 1530 via an interface 1534.

Computing platform 1530, which can provide computing functionality for device 1500, can include a processor 1540 and other platform components 1750, e.g., processors, memory units, chipsets, controllers, peripherals, interfaces, input/output (I/O) components, power supplies, and the like.

Device 1500 can be, e.g., a mobile device, a smart phone, a fixed device, a machine-to-machine device, a personal digital assistant (PDA), a mobile computing device, a user equipment, a computer, a network appliance, a web appliance, consumer electronics, programmable consumer electronics, game devices, television, digital television, set top box, wireless access point, base station, subscriber station, mobile subscriber center, radio network controller, router, hub, gateway, and the like. These examples are not limiting.

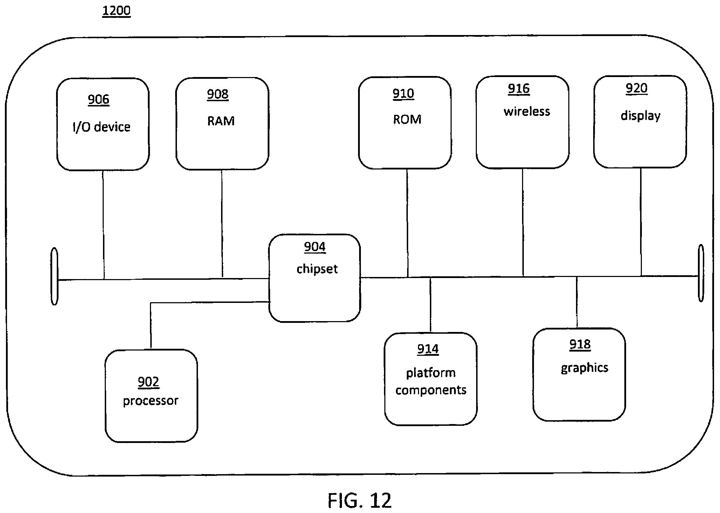

Fig. 12 is an exemplary system embodiment configured as a platform 1200, which can include, e.g., a processor 902, a chipset 904, an I/O (input/output) device 906, a RAM (random access memory) 908, e.g., DRAM (dynamic RAM), and a ROM (read only memory) 910, a wireless communications chip 916, a graphics device 918, and a display 920, and other platform components 914 (e.g., a cooling system, a heat sink, vents, and the like), which are coupled to one another by way of a bus 312 and chipset 904. The examples are not limiting.

The techniques described herein are exemplary, and should not be construed as implying any specific limitation on the present disclosure. It should be understood that various alternatives, combinations and modifications could be devised by those skilled in the art. For example, steps associated with the processes described herein can be performed in any order, unless otherwise specified or dictated by the steps themselves. The present disclosure is intended to embrace all such alternatives, modifications and variances that fall within the scope of the appended claims.

The terms "comprise" or "comprising" are to be interpreted as specifying the presence of the stated features, integers, steps or components, but not precluding the presence of one or more other features, integers, steps or components or groups thereof. The terms "a" and "an" are indefinite articles, and as such, do not preclude embodiments having pluralities of articles.

Some embodiments may be described using the expression "one embodiment" or "an embodiment" along with their derivatives. These terms mean that a particular feature, structure, or characteristic described in connection with the embodiment is included in at least one embodiment. The appearances of the phrase "an embodiment" in various places in the specification are not necessarily all referring to the same embodiment.

## Claims

1. A shaving system configured to process at least one of a command and a query, comprising:
a razor handle (199);
a microphone (6115) provided on or in the razor handle and configured to accept a natural-language voice input from a user regarding at least one of a command and a query relating to at least one of a shaving cartridge purchase and shaving cartridge information;
a control unit (6004) configured to process the at least one of the command and the query relating to at least one of the shaving cartridge purchase and shaving cartridge information;
at least one of a transceiver (6007a) and an interface provided on or in the razor handle and configured to (i) transmit the at least one of the command and the query relating to at least one of the shaving cartridge purchase and shaving cartridge information to a vendor platform (6023) connected to the Internet, and (ii) receive a response transmission from the vendor platform in response to the at least one of the command and the query relating to at least one of the shaving cartridge purchase and shaving cartridge information, wherein the control unit is configured to process the response transmission; and
a speaker (6115) configured to output a natural-language voice output corresponding to the response transmission from the vendor platform.

2. The system according to claim 1, wherein the shaving system is an Internet Protocol (IP) capable system, and the at least one of the transceiver (6007a) and the interface (6006a) is configured to directly interface with an Internet gateway connected to the Internet to transmit the at least one of the command and the query to the vendor platform (6023).

3. The system according to claim 1 or 2, further comprising:
a razor cartridge (100); and
a sensing unit (6001) configured to implement at least one of an electrical sensing technique, an optical sensing technique, and an electrochemical sensing technique to detect at least one of a physical property and an electrochemical property of a blade (117) of the razor cartridge indicative of a level of wear of the blade;
wherein the control unit (6004) is configured to compare the at least one of the physical property and an electrochemical property of the blade to a reference threshold parameter and determine a level of wear of the blade based on the comparison.

4. The system according to claim 3, further comprising:
a notification unit (6003a) comprising at least one of (i) a light indication unit configured to output information regarding the determined level of blade wear, (ii) an aural indication unit configured to output information regarding the determined level of blade wear, and (iii) a haptic indication unit configured to output information regarding the determined level of blade wear, wherein the notification unit is configured to provide an indication to replace the razor cartridge (100).

5. The system according to claim 1, wherein the at least one of the transceiver (6007a) and the interface (6006a) is configured to transmit the at least one of the command and the query to at least one of an Internet Protocol (IP) capable mobile device and an Internet Protocol (IP) capable computer, and wherein the at least one of the mobile device and the computer interfaces with an Internet gateway connected to the Internet to transmit the at least one of the command and the query to the vendor platform.

6. The system according to any one of claims 1-5, wherein the speaker (6115) is provided on or in the razor handle (199).

7. The system according to any one of claims 1-6, wherein the control unit (6004) is provided on or in the razor handle (199).

8. The system according to any one of claims 1-7, wherein the natural-language voice input from a user is a multi-language voice input.

9. The system according to any one of claims 1-8, wherein the natural-language voice output corresponding to the response transmission is a multi-language voice output.

10. A method for processing at least one of a command and a query using a shaving system (700, 800 900), comprising:
inputting, via a microphone (6115) provided one of on or in a razor handle (199) of the shaving system, a natural-language voice input from a user regarding at least one of a command and a query relating to at least one of a shaving cartridge purchase and shaving cartridge information;
processing, by a control unit (6004), the at least one of the command and the query relating to at least one of the shaving cartridge purchase and shaving cartridge information;
transmitting, by at least one of a transceiver (6007a) and an interface, the at least one of the command and the query relating to at least one of the shaving cartridge purchase and shaving cartridge information to a vendor platform (6023) connected to the Internet;
receiving, by at least one of the transceiver and the interface, a response transmission from the vendor platform in response to the at least one of the command and the query relating to at least one of the shaving cartridge purchase and shaving cartridge information;
processing, by the control unit, the response transmission; and
outputting, by a speaker (6115), a natural-language voice output corresponding to the response transmission from the vendor platform.

11. The method (700, 800, 900) according to claim 10, wherein the shaving system is an Internet Protocol (IP) capable system, and the at least one of the transceiver (6007a) and the interface directly interfaces with an Internet gateway (6020) connected to the Internet to transmit the at least one of the command and the query to the vendor platform.

12. The method (900) according to claim 10 or 11, wherein the at least one of the transceiver (6007a) and the interface transmits the at least one of the command and the query to at least one of an Internet Protocol (IP) capable mobile device and an Internet Protocol (IP) capable computer, and wherein the at least one of the mobile device and the computer interfaces with an Internet gateway connected to the Internet to transmit the at least one of the command and the query to the vendor platform.

13. The method according to any one of claims 10-12, wherein the wherein the natural-language voice input from a user is a multi-language voice input.

14. The method according to any one of claims 10-13, wherein the natural-language voice output corresponding to the response transmission is a multi-language voice output.

## Patentansprüche

1. Rasiersystem, das konfiguriert ist, um einen Befehl und/oder eine Abfrage zu verarbeiten, das Folgendes umfasst:
einen Rasierergriff (199);
ein Mikrofon (6115), das an oder in dem Rasierergriff bereitgestellt und konfiguriert ist, um eine Spracheingabe in natürlicher Sprache von einem Benutzer bezüglich einem Befehl und/oder einer Abfrage zu akzeptieren, der/die sich auf einen Rasierklingeneinheitskauf und/oder Rasierklingeneinheitsinformationen bezieht;
eine Steuereinheit (6004), die konfiguriert ist, um den Befehl und/oder die Abfrage zu verarbeiten, der/die sich auf den Rasierklingeneinheitskauf und/oder die Rasierklingeneinheitsinformationen bezieht;
einen Sendeempfänger (6007a) und/oder eine Schnittstelle, der/die an oder in dem Rasierergriff bereitgestellt und konfiguriert ist, um (i) den Befehl und/oder die Abfrage, der/die sich auf den Rasierklingeneinheitskauf und/oder die Rasierklingeneinheitsinformationen bezieht, an eine Anbieterplattform (6023) zu übertragen, die mit dem Internet verbunden ist, und (ii) eine Antwortübertragung von der Anbieterplattform als Reaktion auf den Befehl und/oder die Abfrage zu empfangen, der/die sich auf den Rasierklingeneinheitskauf und/oder die Rasierklingeneinheitsinformationen bezieht, wobei die Steuereinheit konfiguriert ist, um die Antwortübertragung zu verarbeiten; und
einen Lautsprecher (6115), der konfiguriert ist, um eine Sprachausgabe in natürlicher Sprache auszugeben, die der Antwortübertragung von der Anbieterplattform entspricht.

2. System nach Anspruch 1, wobei das Rasiersystem ein Internetprotokoll(IP)-fähiges System ist und der Sendeempfänger (6007a) und/oder die Schnittstelle (6006a) konfiguriert ist, um mit einem Internet-Gateway direkt eine Schnittstelle zu bilden, das mit dem Internet verbunden ist, um den Befehl und/oder die Abfrage an die Anbieterplattform (6023) zu übertragen.

3. System nach Anspruch 1 oder 2, das ferner Folgendes umfasst:
eine Rasierklingeneinheit (100); und
eine Abtasteinheit (6001), die konfiguriert ist, um eine elektrische Abtasttechnik, eine optische Abtasttechnik und/oder eine elektrochemische Abtasttechnik zu implementieren, um eine physikalische Eigenschaft und/oder eine elektrochemische Eigenschaft einer Klinge (117) der Rasierklingeneinheit zu erfassen, die einen Verschleißgrad der Klinge anzeigt;
wobei die Steuereinheit (6004) konfiguriert ist, um die physikalische Eigenschaft und/oder eine elektrochemische Eigenschaft der Klinge mit einem Referenzschwellenwertparameter zu vergleichen und basierend auf dem Vergleich einen Verschleißgrad der Klinge zu bestimmen.

4. System nach Anspruch 3, das ferner Folgendes umfasst:
eine Benachrichtigungseinheit (6003a), die Folgendes umfasst: (i) eine Lichtanzeigeeinheit, die konfiguriert ist, um Informationen bezüglich des bestimmten Klingenverschleißgrades auszugeben, (ii) eine aurale Anzeigeeinheit, die konfiguriert ist, um Informationen bezüglich des bestimmten Klingenverschleißgrades auszugeben, und/oder (iii) eine haptische Anzeigeeinheit, die konfiguriert ist, um Informationen bezüglich des bestimmten Klingenverschleißgrades auszugeben, wobei die Benachrichtigungseinheit konfiguriert ist, um eine Anzeige bereitzustellen, um die Rasierklingeneinheit (100) auszutauschen.

5. System nach Anspruch 1, wobei der Sendeempfänger (6007a) und/oder die Schnittstelle (6006a) konfiguriert ist, um den Befehl und/oder die Abfrage an ein Internetprotokoll(IP)-fähiges Mobilgerät und/oder einen Internetprotokoll(IP)-fähigen Computer zu übertragen, und wobei das Mobilgerät und/oder der Computer mit einem Internet-Gateway eine Schnittstelle bildet, das mit dem Internet verbunden ist, um den Befehl und/oder die Abfrage an die Anbieterplattform zu übertragen.

6. System nach einem der Ansprüche 1-5, wobei der Lautsprecher (6115) an oder in dem Rasierergriff (199) bereitgestellt ist.

7. System nach einem der Ansprüche 1-6, wobei die Steuereinheit (6004) an oder in dem Rasierergriff (199) bereitgestellt ist.

8. System nach einem der Ansprüche 1-7, wobei die Spracheingabe in natürlicher Sprache von einem Benutzer eine Spracheingabe in mehreren Sprachen ist.

9. System nach einem der Ansprüche 1-8, wobei die Sprachausgabe in natürlicher Sprache, die der Antwortübertragung entspricht, eine Sprachausgabe in mehreren Sprachen ist.

10. Verfahren zum Verarbeiten eines Befehls und/oder einer Abfrage unter Verwendung eines Rasiersystems (700, 800 900), das Folgendes umfasst:
Eingeben, über ein Mikrofon (6115), das an oder in einem Rasierergriff (199) des Rasiersystems bereitgestellt ist, einer Spracheingabe in natürlicher Sprache von einem Benutzer bezüglich eines Befehls und/oder einer Abfrage, der/die sich auf den Rasierklingeneinheitskauf und/oder die Rasierklingeneinheitsinformationen bezieht;
Verarbeiten, durch eine Steuereinheit (6004), des Befehls und/oder der Abfrage, der/die sich auf den Rasierklingeneinheitskauf und/oder die Rasierklingeneinheitsinformationen bezieht;
Übertragen, durch einen Sendeempfänger (6007a) und/oder eine Schnittstelle, des Befehls und/oder der Abfrage, der/die sich auf den Rasierklingeneinheitskauf und/oder die Rasierklingeneinheitsinformationen bezieht, an eine Anbieterplattform (6023), die mit dem Internet verbunden ist;
Empfangen, durch den Sendeempfänger und/oder die Schnittstelle, einer Antwortübertragung von der Anbieterplattform als Reaktion auf den Befehl und/oder die Abfrage, der/die sich auf den Rasierklingeneinheitskauf und/oder die Rasierklingeneinheitsinformationen bezieht;
Verarbeiten, durch die Steuereinheit, der Antwortübertragung; und
Ausgeben, durch einen Lautsprecher (6115), einer Sprachausgabe in natürlicher Sprache, die der Antwortübertragung von der Anbieterplattform entspricht.

11. Verfahren (700, 800, 900) nach Anspruch 10, wobei das Rasiersystem ein Internetprotokoll(IP)-fähiges System ist und der Sendeempfänger (6007a) und/oder die Schnittstelle mit einem Internet-Gateway (6020) direkt eine Schnittstelle bildet, das mit dem Internet verbunden ist, um den Befehl und/oder die Abfrage an die Anbieterplattform zu übertragen.

12. Verfahren (900) nach Anspruch 10 oder 11, wobei der Sendeempfänger (6007a) und/oder die Schnittstelle den Befehl und/oder die Abfrage an ein Internetprotokoll(IP)-fähiges Mobilgerät und/oder einen Internetprotokoll(IP)-fähigen Computer überträgt, und wobei das Mobilgerät und/oder der Computer mit einem Internet-Gateway eine Schnittstelle bildet, das mit dem Internet verbunden ist, um den Befehl und/oder die Abfrage an die Anbieterplattform zu übertragen.

13. Verfahren nach einem der Ansprüche 10-12, wobei die Spracheingabe in natürlicher Sprache von einem Benutzer eine Spracheingabe in mehreren Sprachen ist.

14. Verfahren nach einem der Ansprüche 10-13, wobei die Sprachausgabe in natürlicher Sprache, die der Antwortübertragung entspricht, eine Sprachausgabe in mehreren Sprachen ist.

## Revendications

1. Système de rasage configuré pour traiter un ordre et/ou une requête, comprenant :
un manche de rasoir (199) ;
un microphone (6115) prévu sur ou dans le manche de rasoir et configuré pour accepter une entrée vocale en langage naturel d'un utilisateur à propos d'un ordre et/ou d'une requête concernant un achat de cartouche de rasage et/ou des informations de cartouche de rasage ;
une unité de commande (6004) configurée pour traiter l'ordre et/ou la requête concernant l'achat de cartouche de rasage et/ou les informations de cartouche de rasage ;
un émetteur-récepteur (6007a) et/ou une interface prévus sur ou dans le manche de rasoir et configurés pour (i) transmettre l'ordre et/ou la requête concernant l'achat de cartouche de rasage et/ou les informations de cartouche de rasage à une plate-forme de fournisseur (6023) connectée à Internet, et (ii) recevoir une transmission de réponse provenant de la plate-forme de fournisseur en réponse à l'ordre et/ou à la requête concernant l'achat de cartouche de rasage et/ou les informations de cartouche de rasage, l'unité de commande étant configurée pour traiter la transmission de réponse ; et
un haut-parleur (6115) configuré pour émettre une sortie vocale en langage naturel correspondant à la transmission de réponse provenant de la plate-forme de fournisseur.

2. Système selon la revendication 1, dans lequel le système de rasage est un système compatible avec un protocole Internet (IP), et l'émetteur-récepteur (6007a) et/ou l'interface (6006a) sont configurés pour s'interfacer directement avec une passerelle Internet connectée à Internet pour transmettre l'ordre et/ou la requête à la plate-forme de fournisseur (6023).

3. Système selon la revendication 1 ou 2, comprenant en outre :
une cartouche de rasoir (100) ; et
une unité de détection (6001) configurée pour mettre en œuvre une technique de détection électrique, et/ou une technique de détection optique et/ou une technique de détection électrochimique pour détecter une propriété physique et/ou une propriété électrochimique d'une lame (117) de la cartouche de rasoir indiquant un niveau d'usure de la lame ;
l'unité de commande (6004) étant configurée pour comparer la propriété physique et/ou la propriété électrochimique de la lame à un paramètre de seuil de référence et déterminer un niveau d'usure de la lame sur la base de la comparaison.

4. Système selon la revendication 3, comprenant en outre :
une unité de notification (6003a) comprenant (i) une unité d'indication lumineuse configurée pour émettre des informations à propos du niveau déterminé d'usure de lame, et/ou (ii) une unité d'indication auditive configurée pour émettre des informations à propos du niveau déterminé d'usure de lame, et/ou (iii) une unité d'indication haptique configurée pour émettre des informations à propos du niveau déterminé d'usure de lame, l'unité de notification étant configurée pour fournir une indication pour remplacer la cartouche de rasoir (100).

5. Système selon la revendication 1, dans lequel l'émetteur-récepteur (6007a) et/ou l'interface (6006a) sont configurés pour transmettre l'ordre et/ou la requête à un dispositif mobile compatible avec un protocole Internet (IP) et/ou un ordinateur compatible avec un protocole Internet (IP), et dans lequel le dispositif mobile et/ou l'ordinateur s'interfacent avec une passerelle Internet connectée à Internet pour transmettre l'ordre et/ou la requête à la plate-forme de fournisseur.

6. Système selon l'une quelconque des revendications 1 à 5, dans lequel le haut-parleur (6115) est prévu sur ou dans le manche de rasoir (199).

7. Système selon l'une quelconque des revendications 1 à 6, dans lequel l'unité de commande (6004) est prévue sur ou dans le manche de rasoir (199).

8. Système selon l'une quelconque des revendications 1 à 7, dans lequel l'entrée vocale en langage naturel d'un utilisateur est une entrée vocale multilingue.

9. Système selon l'une quelconque des revendications 1 à 8, dans lequel la sortie vocale en langage naturel correspondant à la transmission de réponse est une sortie vocale multilingue.

10. Procédé destiné au traitement d'un ordre et/ou d'une requête à l'aide d'un système de rasage (700, 800, 900), comprenant :
l'entrée, par l'intermédiaire d'un microphone (6115) fourni sur ou dans un manche de rasoir (199) du système de rasage, d'une entrée vocale en langage naturel d'un utilisateur à propos d'un ordre et/ou d'une requête concernant un achat de cartouche de rasage et/ou des informations de cartouche de rasage ;
le traitement, par une unité de commande (6004), de l'ordre et/ou de la requête concernant l'achat de cartouche de rasage et/ou les informations de cartouche de rasage ;
la transmission, par un émetteur-récepteur (6007a) et/ou une interface, de l'ordre et/ou de la requête concernant l'achat de cartouche de rasage et/ou les informations de cartouche de rasage à une plate-forme de fournisseur (6023) connectée à Internet ;
la réception, par l'émetteur-récepteur et/ou l'interface, d'une transmission de réponse provenant de la plate-forme de fournisseur en réponse à l'ordre et/ou à la requête concernant l'achat de cartouche de rasage et/ou les informations de cartouche de rasage ;
le traitement, par l'unité de commande, de la transmission de réponse ; et
l'émission, par un haut-parleur (6115), d'une sortie vocale en langage naturel correspondant à la transmission de réponse provenant de la plate-forme de fournisseur.

11. Procédé (700, 800, 900) selon la revendication 10, dans lequel le système de rasage est un système compatible avec un protocole Internet (IP), et l'émetteur-récepteur (6007a) et/ou l'interface s'interfacent directement avec une passerelle Internet (6020) connectée à Internet pour transmettre l'ordre et/ou la requête à la plate-forme de fournisseur.

12. Procédé (900) selon la revendication 10 ou 11, dans lequel l'émetteur-récepteur (6007a) et/ou l'interface transmettent l'ordre et/ou la requête à un dispositif mobile compatible avec un protocole Internet (IP) et/ou un ordinateur compatible avec un protocole Internet (IP), et dans lequel le dispositif mobile et/ou l'ordinateur s'interfacent avec une passerelle Internet connectée à Internet pour transmettre l'ordre et/ou la requête à la plate-forme de fournisseur.

13. Procédé selon l'une quelconque des revendications 10 à 12, dans lequel l'entrée vocale en langage naturel d'un utilisateur est une entrée vocale multilingue.

14. Procédé selon l'une quelconque des revendications 10 à 13, dans lequel la sortie vocale en langage naturel correspondant à la transmission de réponse est une sortie vocale multilingue.
